(19) Europäisches Patentamt

European Patent Office

Office européen des brevets

(11) EP 1 398 773 A2

(12) EUROPEAN PATENT APPLICATION

(43) Date of publication:
17.03.2004 Bulletin 2004/12

(51) Int Cl.⁷: $G11B\ 7/007$, $G06F\ 17/60$

(21) Application number: 03251723.7

(22) Date of filing: 19.03.2003

(84) Designated Contracting States:
AT BE BG CH CY CZ DE DK EE ES FI FR GB GR
HU IE IT LI LU MC NL PT RO SE SI SK TR
Designated Extension States:
AL LT LV MK

(30) Priority: 30.08.2002 JP 2002255151

(71) Applicant: FUJITSU LIMITED
Kawasaki-shi, Kanagawa 211-8588 (JP)

(72) Inventor: Aoyama, Nobuhide, c/o Fujitsu Limited
Kawasaki-shi, Kanagawa 211-8588 (JP)

(74) Representative: Stebbing, Timothy Charles
Haseltine Lake & Co.,
Imperial House,
15-19 Kingsway
London WC2B 6UD (GB)

(54) Content delivery method and system for same

(57)  A content delivery method and system delivers media (3) with content stored in ROM while the latest advertising information is added. Moreover, advertisements can be viewed or heard easily during reproduction (S16). Recording media are used in which content information is in physically stable ROM, while advertising information is recorded in RAM, enabling the delivery of content with advertisements for which the advertisement period has not elapsed (S14). In addition, by reproducing content using media enabling simultaneous ROM and RAM reproduction, as well as a drive for such media, advertisements can be automatically reproduced. Consequently, users can view or hear advertisements without being conscious of an effort to obtain the advertisements. In this way the advertisements stored on a medium (3) can be changed each time a user hires the medium from a hire shop, for example (S12). This prevents the advertisements from becoming outdated. Thus, the advertisements accompanying a DVD containing a film, for example, are not limited to those recorded at the time of release of the DVD.

FIG. 2

**Description**

This invention relates to a content delivery method and system for the delivery of music, video, game, computer software, and other content with ancillary information attached, and in particular to a content delivery method and system which uses storage media to perform delivery of such content and information.

Content such as music, video, and games can be stored on videotapes, CDs (compact disks), CD-ROMs, DVDs, and other media. In recent years, illegal copying of music CDs and other content onto CD-Rewritable (CD-R) disks and the exchange of software over the Internet, in what is called "casual hacking," has become a problem, and there has been a slump in the number of CDs sold. Furthermore, with the spread of portable telephones, most of the pocket money and funds spent for entertainment of young persons, particularly in their teens and twenties, has come to be spent on portable telephone fees, and as a result, it is said, sales of media content have declined.

In order to ameliorate this harsh business environment for content providers, content delivery methods that employ advertising revenue are being studied. Content delivery utilizing advertising revenue is effective for delivery over the Internet. However, although the proportion of households using personal computers has increased, actual content delivery over the Internet entails problems with security and problems of communication speeds, as well as the absence among ordinary consumers of the habit of paying money to download formless data. Consequently, adoption of such methods has been limited.

Various methods using memory media to deliver content with advertising attached have been proposed. Because the recording media cannot typically be rewritten, advertising information has been recorded on CDs, CD-ROMs, DVDs and the like. However, such advertising information is unsuitable when placed as introductions to new songs, new movies, and the like because introductions or "trailers" to older, dated movies, for example, would still be included as advertisements, no matter how many years had elapsed. In general, advertisements have expiration dates, and older advertising information is not effective as an advertisement.

Consequently, methods are proposed in which a RAM (random access memory) area is provided as the storage medium, and at the time of distribution, an advertisement ID is written to the RAM area for distribution to users.

For example, in Japanese Laid-open Patent No. 10-105452, Japanese Laid-open Patent No. 2001-101836, Japanese Laid-open Patent No. 2001-135023, and Japanese Laid-open Patent No. 2002-32685, systems are disclosed in which an advertising information pointer is written to the recording medium separately from the content, the recording medium is distributed to users, and users read the pointer and obtain advertising information from an advertising information provider over the Internet or via a digital broadcast, which is then displayed on the user's computer terminal.

Also, in Japanese Laid-open Patent No. 2002-24570, a system is disclosed in which advertising information is attached to an electronic newspaper, or a similar content-containing distributable medium, and advertising information is displayed through user operation.

However, in these previous proposals, the user must perform an operation to select the advertising information, separately from the content, in order to view or hear the advertisement, which is troublesome for the user. As a result, the effectiveness of the advertisement may be diminished.

Also, when the Internet or a digital broadcast is utilized, a reproduction device having functions necessary to access such media is required, and the user must ordinarily purchase such a device in order to access the advertisements. Thus, there is the problem that such methods are not suited to universal use.

Hence, embodiments of this invention may provide a content delivery method and system for the output of recent or the latest information of interest to a user, such as advertisements, while reproducing content without any special operation by the user to display advertisements.

Further embodiments of this invention may provide a content delivery method and system to reproduce content, while also performing output of recent or the latest advertisements using recording media, without having to connect to the Internet or other external systems.

Further embodiments of this invention may provide a content delivery method and system to reproduce content and perform output of recent or the latest advertisements using recording media, to facilitate the ready widespread adoption of content delivery, utilizing advertising revenue.

In a first aspect of the present invention, a content delivery method of this invention includes a step of writing information to a RAM portion of a recording medium and delivering the recording medium with content, the content being recorded in a ROM portion of the recording medium, to a user, and a step of simultaneously reproducing the content and the information of the recording medium using a reproduction device which employs a single pickup mechanism to simultaneously reproduce the data in the ROM portion and the RAM portion of the recording medium.

In a second aspect of the present invention, a content delivery system includes a writing device which writes information to the RAM portion of recording media when delivering recording media, with content written to the ROM portion to a user, and a reproduction device which uses a single pickup mechanism to reproduce information in the RAM portion and content in the ROM portion of the recording media when reproducing content on the recording media. The reproduction device would thus simultaneously reproduce the content and the information on the recording media.

A further aspect of the invention relates to a storage medium suitable for use in the above method and system.

Preferably, in the method and system of the invention, the information in the RAM portion includes advertising information.

According to embodiments of the present invention, recording media should be used in which content information is recorded as physically stable ROM information, and advertising information is recorded in RAM, so that it is possible to deliver content with advertisements which have not exceeded an advertising expiration date. And, because media which enable simultaneous reproduction from both ROM and RAM, along with a drive for these media, are utilized, when content is reproduced, advertisements will also be reproduced, so that the user can view the advertisements without being conscious of an effort to obtain or view the advertisements. Consequently, by thus being able to include advertising revenue in delivery costs, the same content can be provided more inexpensively and in a more stable manner, without detracting from the revenue of the content business.

In embodiments of the present invention, it is preferable that the above recording media include a ROM portion which records the content as depressions and protrusions, or other physical changes of an optically transparent or reflective substrate, and a RAM portion formed of a rewritable recording layer on the ROM portion, either directly or separated by other layers. By this configuration, advertising information can be rewritten, while preventing overwriting of content.

In embodiments of the present invention, it is preferable that the RAM portion of the recording media be magnetooptical recording media, and that the reproduction device be a magnetooptical media drive which uses light to reproduce data from the ROM portion and the RAM portion of the magnetooptical recording media. By this configuration, content and advertisements can more easily be simultaneously reproduced.

It is also preferable to further include a step of providing financial or otherwise valuable rebates to the user, according to the advertising information written by the writing device. Cash rebates, for example, based on such advertisements can thus be provided to a user who has selected content with the advertisements attached or included.

It is further preferable that the writing step also includes a step of writing the advertising information to the RAM portion such that the advertising information is reproduced in synchronization with streaming information. In this embodiment, streaming information would be the content of the ROM portion as output according to elapsed time. By this method, advertisements can be presented within a desired timing during streaming reproduction, in order to increase the effect of the advertisements on the user or viewer. For example, the position for writing of advertising information to RAM can be associated with the position for writing of the content to the ROM portion.

It is also preferable in embodiments of the present invention that EFM-modulated content be stored in the ROM portion, and that the information in the RAM portion be recorded by frequency modulation. By such a method, a single optical pickup mechanism can be used to easily differentiate and/or separate the ROM and RAM information.

In embodiments of the present invention, it is preferable that content which includes voice information or image information be recorded as ROM information and, moreover, that ancillary data such as voice advertisements or image advertisements be recorded as RAM information, and that the information of the ROM portion and the RAM portion be output simultaneously by an audio or image output device connected to the reproduction device. According to this method, content with advertisements including ordinary voice data or image data can be more easily delivered.

In further embodiments of the present invention, it is preferable that the reproduction step includes a step in which the ROM information is output at n times the output speed of the RAM information (where n is a number greater than 1) and that, when the ROM information is output at n times the RAM information output speed, the RAM information continues to be output at the same speed as before (at 1 times the RAM information output speed).

According to this method, advertisements can even be effectively viewed during a 2 times speed dubbing operation, for example.

Embodiments of the present invention preferably also include that the writing step further includes a step of updating the RAM information when the content is rented to the user for a limited time period. By this method, it is possible to apply the present invention to existing media rental systems.

A further embodiment of the present invention preferably further includes a step of returning the recording medium to an authorized rental agent, advertiser, content provider, or the like, after information recording to the above RAM potion is performed by the user utilizing a recording/reproduction device for the recording medium. By this method, it is possible to collect questionnaire results, for example, to determine the number of times a reproduction, or similar event, is performed, so that the effect of the advertising may be further determined and enhanced.

By including content in a stable form (e.g. ROM) on a medium, and ancillary information such as advertisements in a rewritable form (e.g. RAM), it is possible to ensure a timely delivery of the ancillary information by the user, as well as to facilitate production of the stable content without the need to incorporate the ancillary information. That is, the advertisements, etc. may be added at a separate stage following production of the basic media, and may be added individually or in batches so as to be useful to different groups of users. That is, different copies or batches of media having the same stable content may be provided with respectively different rewritable content. Thus, mass-production of the basic media bearing the stable content may be performed at an earlier stage and/or with a larger production run.

Reference will now be made, by way of example only, to the accompanying drawings, in which:

Fig. 1 shows the configuration of one embodiment of the present invention;
Fig. 2 explains a procedure for content delivery for the configuration shown in Fig. 1;
Fig. 3 shows the configuration of the advertisement downloading machine shown in Fig. 1;
Fig. 4 explains the operation of the advertisement downloading machine of Fig. 3;
Fig. 5 explains the content delivery processing of Fig. 1;
Fig. 6 shows the configuration of the content delivery media of Fig. 1;
Fig. 7 shows the relation between ROM and RAM signals on the content delivery media of Fig. 6;
Fig. 8 shows the configuration of a reproduction device according to one aspect of the present invention;
Fig. 9 is a block diagram of the reproduction device shown in Fig. 8;
Fig. 10 shows the relation between ROM and RAM detection signals in the reproduction device of Fig. 8;
Fig. 11 explains the operation of reproduction of content with advertisements according to one embodiment of the present invention;
Fig. 12 shows the relation between content in ROM, and advertisements in RAM, according to one aspect of the present invention;
Fig. 13 explains the operation of reproduction of content with advertisements according to another embodiment of the present invention; and;
Fig. 14 explains the ROM and RAM modulation signals according to one embodiment of the present invention.

Below, embodiments of this invention are explained, describing, in order, a content delivery system, content delivery media, a content reproduction device, and other embodiments. The embodiments are explained with reference to advertisements as a form of information provided in addition to the content, by way of example.

Content Delivery System

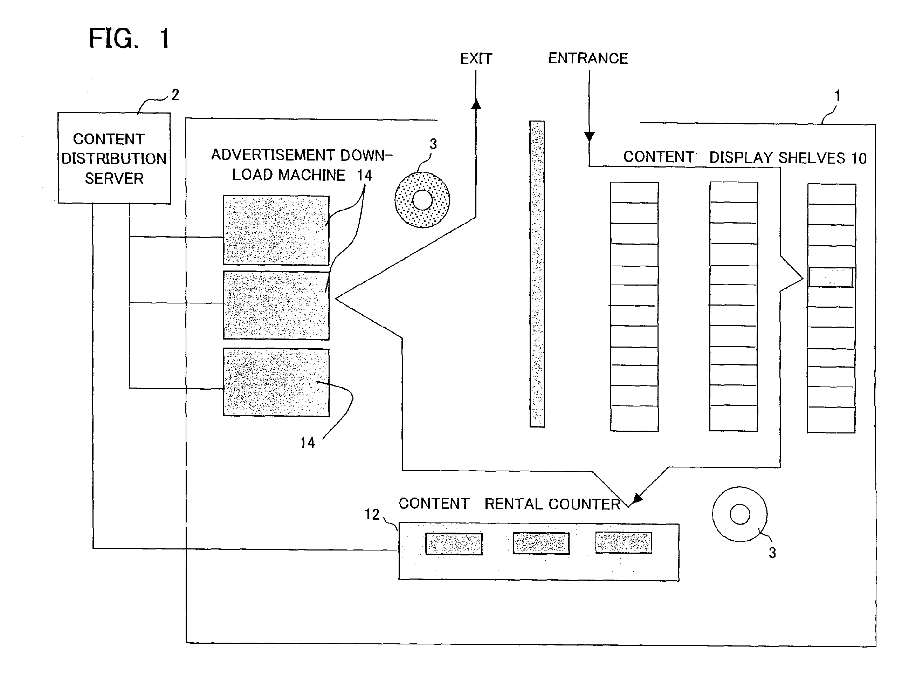

As shown in Fig. 1, content display shelves 10, a content rental counter 12, and advertisement downloading machines 14 are provided in a rental store 1. Numerous content distribution media units 3, which contain recorded content created by content production enterprises, are housed on the content display shelves 10. As one feature of the present invention, as described below, the content delivery media 3 include a ROM portion that physically cannot be rewritten, and a RAM portion that can be rewritten, by the content delivery business or by the user. The ROM portion and RAM portion of the media can be read simultaneously.

At the content rental counter 12, processing is performed to rent (hire out) a content delivery media unit 3 selected by the user from the content display shelves 10. An advertisement downloading machine 14 records advertisements onto the RAM portion of a content delivery media unit 3 which has been processed for renting according to selection by the user, and then the media unit is returned to the user.

The content delivery server 2 is connected to the advertisement downloading machines 14 and to the content rental counter 12, and transmits various advertising data to the advertisement downloading machines 14.

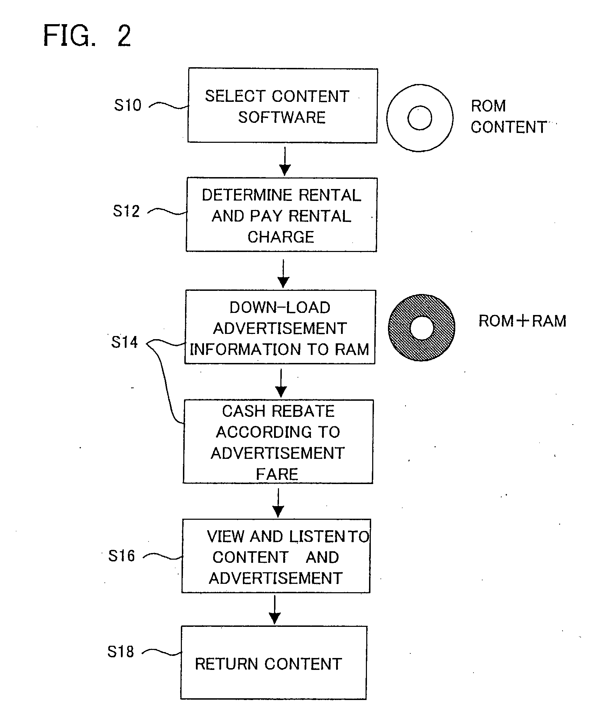

The content delivery procedure for the system of Fig. 1 is explained below, referring step-by-step to Fig. 2.

(S 10) A user who has come to the rental store 1 selects from the content display shelves 10 a content delivery media unit 3 on which is recorded, in ROM, the desired content.

(S 12) The user performs a renting procedure at the rental counter 12. That is, the rental period is determined, and a corresponding rental fee is paid.

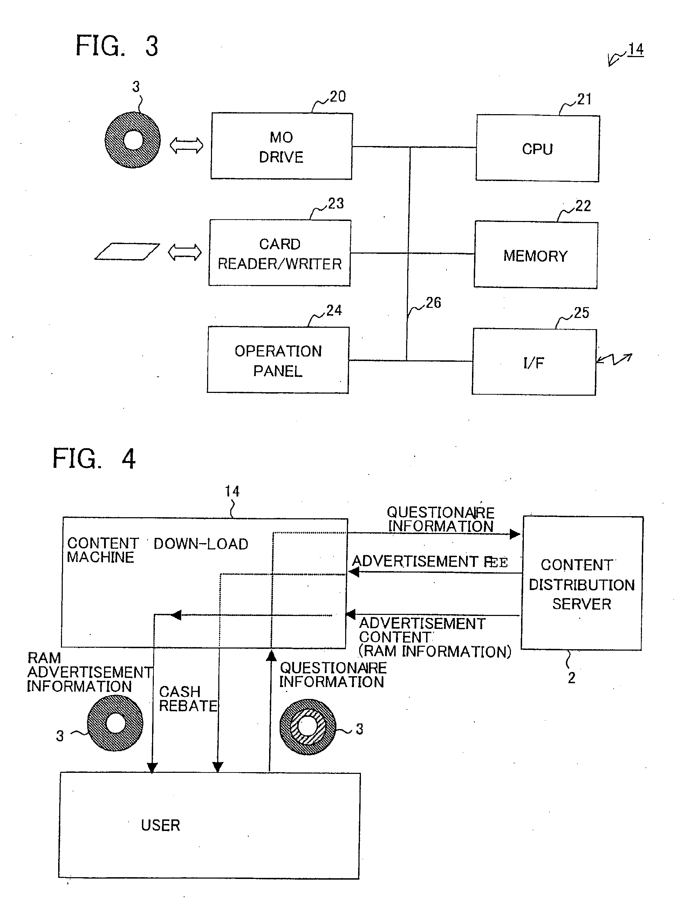

(S 14) When, after completing this rental procedure, in the case that the user desired a cash rebate based on an advertisement, advertisement information is recorded by the advertisement downloading machine 14, described below using Fig. 3, in the RAM portion of the content delivery media unit 3 for which the procedure has been completed, and the user receives the cash rebate according to an advertising fee. As shown in Fig. 4, the content delivery business obtains advertising information from an advertising client, and transmits the information from the content delivery server 2 to the advertisement downloading machines 14. The advertisement downloading machines 14 write information to the RAM portion of the content delivery medium 3, which is sold or rented to the user. Advertising revenue is used for cash rebates to users, and supplements content purchasing fees or rental fees paid by users.

(S 16) The user returns home, or elsewhere, with the rented content delivery media unit 3, and uses a drive or other device to view or listen to the content delivery media unit 3. At this time, content in the ROM portion of the content delivery media unit 3 is read out, and at the same time advertising information in the RAM portion is read out. That is, when the user issues an instruction to view or listen to the content, the advertising information is read out together with the content, and advertisements are viewed or heard automatically. This automatic function is a further preferred feature of embodiments of the present invention.

Also, as shown in Fig. 4, questionnaire information from the user relating to advertisements can also be recorded in the RAM portion. Moreover, the number of times the user has reproduced (played back) ROM information, the number of times RAM information has been reproduced, and other information can be recorded in the RAM portion, and a cash rebate amount can be set according to the number of reproduction times. Also, the user can respond to advertising information in the RAM portion to directly contact the advertiser and receive a cash rebate.

(S 18) The user returns the content delivery media unit 3 to the rental store 1.

By means of a system configured in this way, a rental procedure is performed at the rental counter using a system similar to normal procedures for renting CD music, or similar, content. And when downloading advertisements, users can proceed to the advertisement downloading machines, and download preferred advertisements following the instructions of the downloading machine.

For example, users can execute searches for bargain fares, time-limited sales campaigns, regional help-wanted information or similar, and download the necessary advertisements. Because the downloading of advertising information is left to the user's discretion, in the course of their duties, rental store employees normally need only to contact repair technicians in the event of mechanical trouble with necessary equipment. Depending on circumstances, the advertisement downloading machines can be managed by an advertisement management company, which only pays the rental store a fee for use of store space.

When a user returns content media, questionnaire information can be entered into the downloading machine. By adopting such a configuration, the need for users to own a terminal at home for recording information onto the content media can be eliminated.

The configuration of the advertisement downloading machine 14 is explained using Fig. 3. The advertisement downloading machine 14 includes a user-operated terminal, which in turn includes a media drive 20, a CPU 21, a memory 22, a card reader/writer 23, an operating panel 24, and an interface 25.

The media drive 20 performs reading from and writing to the above ROM-RAM media 3, and preferably includes an MO drive, as explained below, because a magnetooptical (MO) disc is preferably used as the ROM-RAM media 3. Because point cards (loyalty cards) are generally used at the rental store for cash rebates, the card reader/writer 23 is provided which performs point card reading and writing. The operating panel 24 is provided to enable the user to select the above-mentioned advertising information, to request the return of the media, to instruct reading of questionnaire information, and similar functions.

The memory 22 includes, for example, a hard disk drive which can store large amounts of advertising information, cash rebate values for the advertising information, advertisement periods, and similar. The interface circuit 25 controls the interface with the content delivery server 2, receives advertising information and advertisement fees, and sends questionnaire information. The CPU 21 performs various types of control in the advertisement downloading machine.

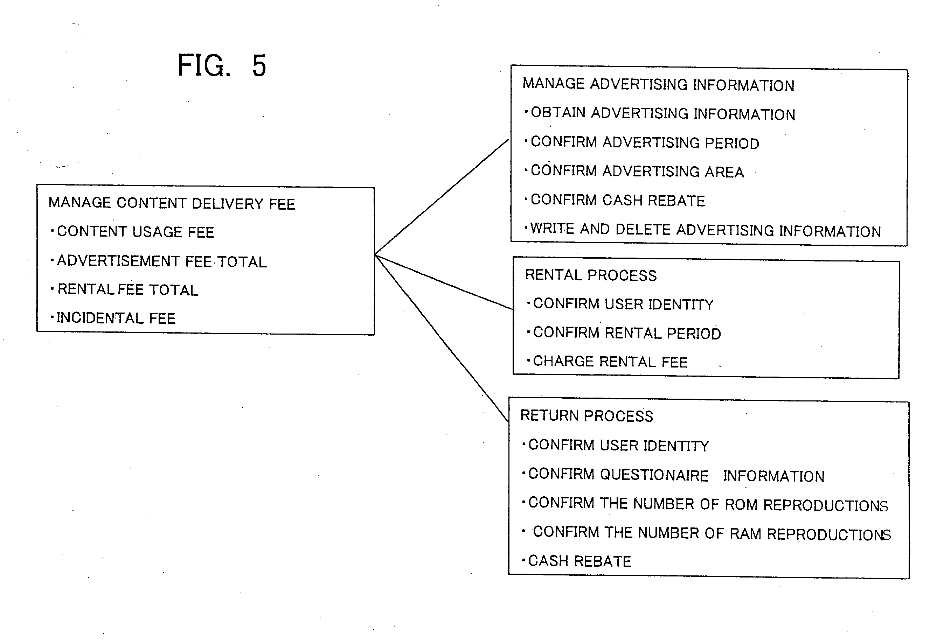

Next, processing of the content delivery server 2 is explained, referring to Fig. 5. Processing of the content delivery server 2 can be broadly divided into four types: processing to manage content delivery fees; processing to manage advertising information; rental processing; and returns processing. Processing to manage advertising information further includes processing to obtain advertising information from the advertising client, processing to confirm advertisement periods, processing to confirm advertisement areas, processing to confirm cash rebate amounts, and processing to write and delete advertising information.

Rental processing further includes processing to confirm user identity at the content lending counter 12, processing to confirm the rental period, and processing to charge rental fees. Returns processing further includes processing to confirm the user identity, processing to confirm questionnaire information, processing to determine the number of ROM reproductions, processing to determine the number of RAM reproductions, and cash rebate processing.

Processing to manage content delivery fees further includes content usage fee processing, advertisement fee total processing, rental fee total processing, and incidental fees, based on the results of the above three processing types.

According to this embodiment of the present invention, the content delivery business performs advertising information management and management of cash rebates for renting fees, in addition to the tasks of renting media to users and receiving returns. Furthermore, the delivery system of the present invention performs writing, updates, and deletion of advertising information according to the time period and the area of residency of users receiving delivery, so that advertising or other information can be provided in a timely fashion and in accordance with user needs.

Content Delivery Media

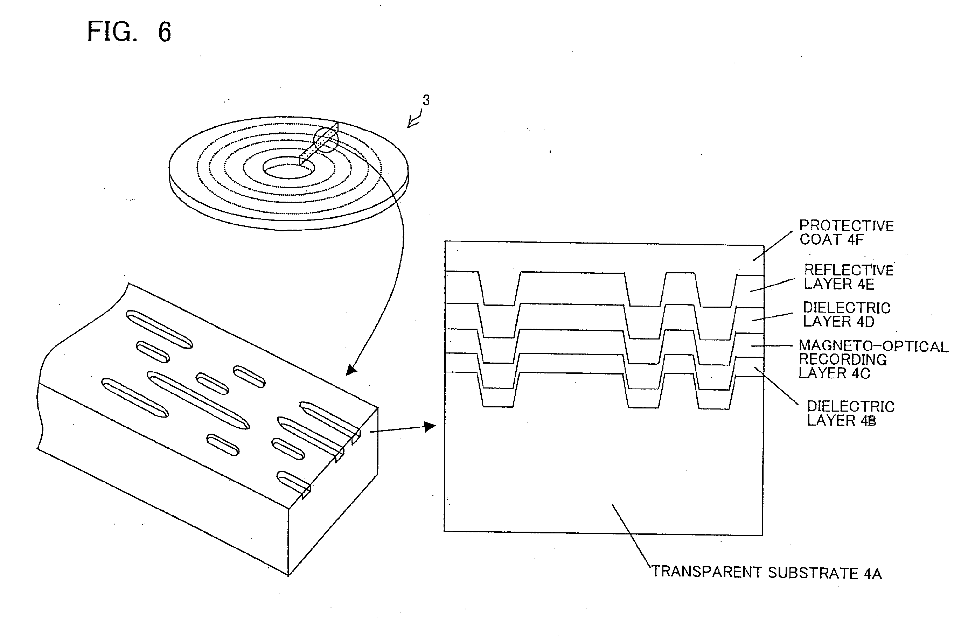

In the following explanation of Fig. 6, an example is explained using as the content delivery medium a ROM-RAM magnetooptical (MO) disk. As shown in Fig.

6, a magneto-optical disk has a disk shape, and is provided with a lead-in region (not numbered) at the innermost circumference, a lead-out region (not numbered) at the outermost circumference, and a user area (not numbered) in between.

The lead-in region and lead-out region are ROM area regions in which phase pits (not numbered) are formed as depressions and protrusions in the disk with a polycarbonate substrate, and in which disk specifications and other information is recorded. By reading this information, the conditions of recording and reproduction can be controlled.

A user area, in which a magnetooptical recording film is preferably deposited by splittering equipment, is provided between the lead-in and the lead-out regions. The user can freely record and reproduce information in the user area.

The construction of a magnetooptical disk 3 providing both ROM and RAM functions to the user area is generally as shown in Fig. 6, in which, on top of a transparent (polycarbonate) substrate 4A, a first dielectric layer 4B, preferably using as material silicon nitride, tantalum oxide or similar, a magnetooptical recording layer 4C preferably including an amorphous alloy of a rare earth and a transition metal, such as TbFeCo, a second dielectric layer 4D, preferably formed from the same material as the first dielectric layer 4B, a reflective layer 4E preferably of AlTi, Au or another metal, and a protective coating layer 4F preferably using an ultraviolet light-hardening resin, are formed.

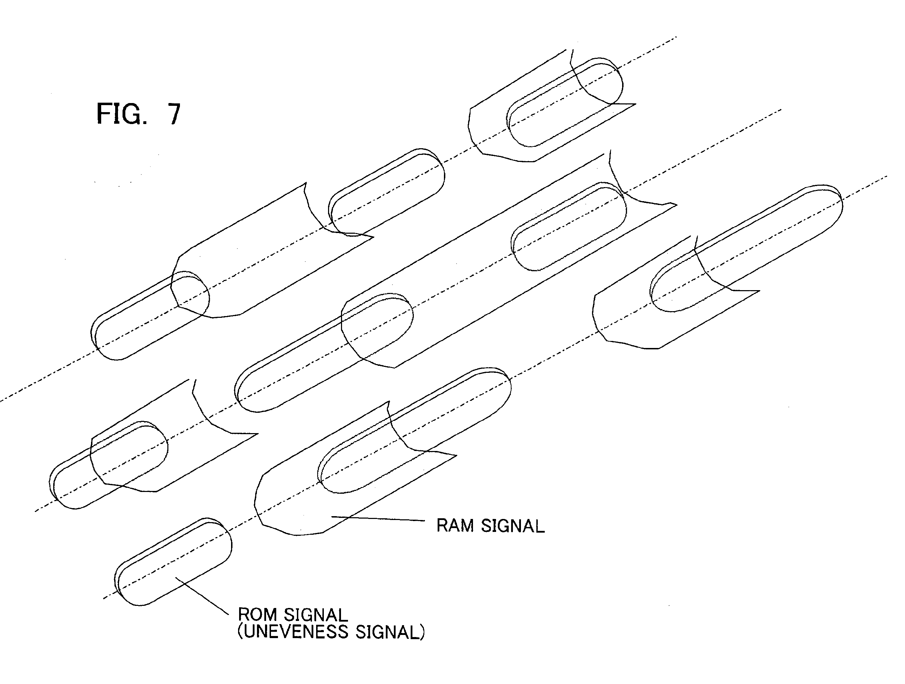

As shown in Figs. 6 and 7, ROM functions are provided by phase pits that form protrusions and depressions in the disk 3, and RAM functions are provided by the magnetooptical recording layer 4C. In recording onto the magnetooptical recording layer 4C, laser light is used to heat the magnetooptical recording layer 4C, assisting a magnetization inversion, the direction of magnetization is inverted according to a signal magnetic field, and magnetooptical signals are recorded. According to this method, RAM information recording is possible. In this embodiment of the present invention, in order to achieve a balance between the signal qualities of ROM information and RAM information, it is desirable that the modulation factor of the phase pits be set to less than 35%.

In reading information recorded on the magnetooptical recording layer 4C, by irradiating the recording layer 4C with weak laser light, the plane of polarization of the laser light can be changed by the polar Kerr effect according to the direction of magnetization in the recording layer 4C. The presence or absence of a signal is judged by the strength of the polarization components of the reflected light. According to this method, RAM information can be read. In this read process, reflected light is modulated by the phase pits made up of ROM data, so that ROM information can be read simultaneously with RAM information.

In optical information recording media having such a structure, as shown in Fig. 7, the ROM information is recorded permanently by means of phase pits, which are preferably depressions and protrusions formed in the flat substrate, and RAM information is recorded as MO signals in the magnetooptical recording layer above the rows of phase pits.

In other words, by means of a single optical pickup, both ROM and RAM data can be reproduced simultaneously. Moreover, by adopting magnetooptical recordings employing a magnetic field modulation method, writing to RAM and reading from ROM can also be performed simultaneously. According to the present invention, content is recorded in the ROM portion (phase pits) of the media, and advertising information is recorded in the RAM portion (magnetooptical recording layer) 4C.

Content Reproduction Device

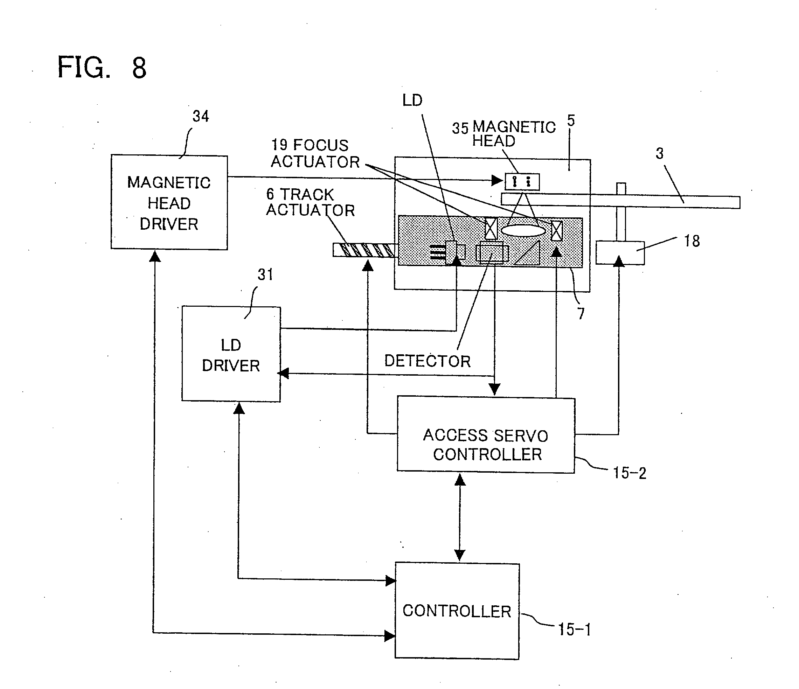

Next, an optical disk drive that is preferably used as the content reproduction device 4 in an embodiment is explained. As shown in Fig. 8, the motor 18 rotates the optical information recording media (MO disk). Normally, the MO disk 3 is a removable medium, and is inserted from an insertion opening (not shown) in the drive. The optical pickup 5 has a magnetic head 35 and an optical head 7, both positioned so as to sandwich the optical information recording medium 3.

The optical pickup 5 is preferably moved by a ball-screw feed mechanism or other track actuator 6, and can access an arbitrary position in the radial direction of the optical information recording medium 3. An LD driver 31 that drives the laser diode LD of the optical head 7, and a magnetic head driver 34 which drives the magnetic head 35 of the optical pickup 5, are also provided. The access servo controller 15-2 executes servo control of the track actuator 6, the motor 18, and the focus actuator 19 of the optical head 7 based on output from the optical head 7. The controller 15-1 operates the LD driver 31, magnetic head driver 34 and access servo controller 15-2 to perform information recording and reproduction.

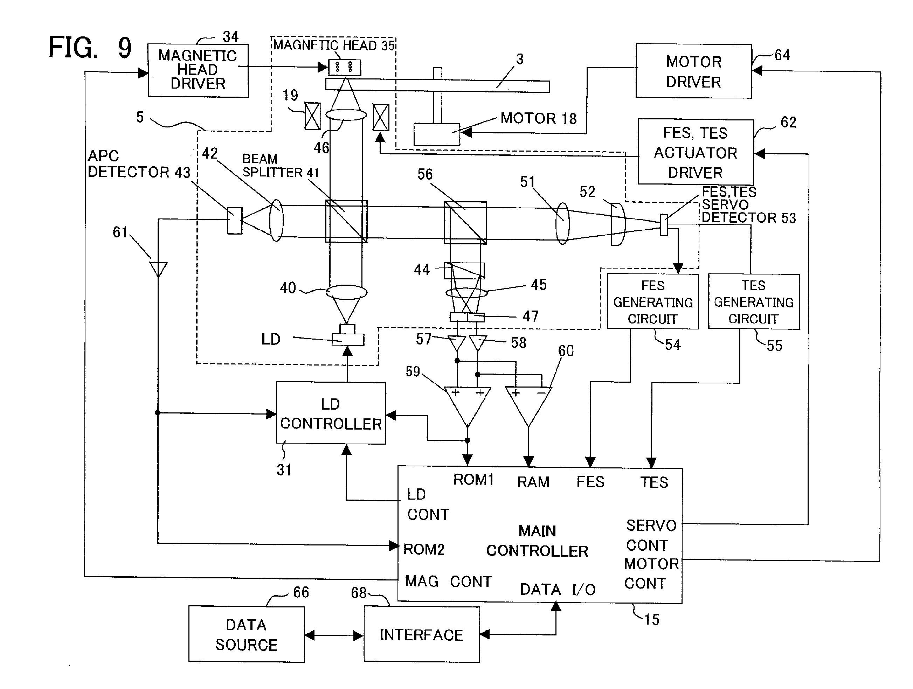

Details of the optical head 7 are now explained with reference to Fig. 9. Dispersed light from the laser diode LD is rendered into a parallel beam by the collimator lens 40 and, after passing through a polarizing beam splitter 41, is condensed substantially to a diffraction limit on the optical information recording medium 3 by an objective lens 46.

A portion of the light incident on the polarizing beam splitter 41 is reflected by the beam splitter 41, and is condensed on an APC (auto-power control) detector 43 by a condensing lens 42.

Light reflected by the optical information recording medium 3 again passes through the objective lens 46 and is again incident on the beam splitter 41. A portion of the light which is again incident on the beam splitter 41 returns to the side of the laser diode LD. The remainder of the light is reflected by the beam splitter 41 and is then incident on a polarizing beam splitter 56. A portion of the light incident on the polarizing beam splitter 56 passes through a two-beam Wollaston prism 44 and condensing lens 45 to be condensed on a two-segment detector 47. The other portion of the light incident on the polarizing beam splitter 56 passes through a condensing lens 51 and cylindrical lens 52 and is condensed on a four-segment detector 53 for servo detection.

An FES (focusing error signal) reproduction circuit 54 performs focusing error signal (FES) detection employing the astigmatism method, based on the outputs A, B, C, D of the four-segment photodetector 53 after photoelectric conversion. That is,

$$FES = ((A+C)-(B+D))/(A+B+C+D)$$

Simultaneously, a TES generation circuit 55 using the push-pull method performs tracking error signal (TES) detection from the output of the four-segment detector 53.

$$TES = ((A+B)-(C+D))/(A+B+C+D)$$

The focusing error signal (FES) and tracking error signal (TES) obtained from these calculations are input to the main controller 15 (in Fig. 8, the access servo controller 15-2) as position error signals in the focusing direction and the tracking direction. As best seen in Fig. 9, the access servo controller 15-2 and controller 15-1 are shown as an integrated main controller 15.

In the recorded information detection system, the polarity characteristics of reflected laser light, which change according to the direction of magnetization due to magnetooptical recording in the optical information recording medium 3, are converted into an optical intensity. That is, polarization detection is used to separate the single beam into two beams with orthogonal polarization directions in a two-beam Wollaston prism 44. After passing through a condensing lens 45, the two beams are incident on a two-segment photodetector 47, and each is then preferably photoelectrically converted.

The two electrical signals G, H resulting from photoelectric conversion by the two-segment photodetector 47 are amplified by amplifiers 57, 58, then added by a summing amplifier 59 to become the first ROM signal (ROM1=G+H), and at the same time are subtracted by a subtracting amplifier 60 to become the RAM readout (MO) signal (RAM=G-H). Each signal is then input to the main controller 15.

In the main controller 15, reflected light of the semiconductor laser diode LD incident on the APC photodetector 43 is photoelectrically converted, and passes through the amplifier 61 to be input as the second ROM signal (ROM2).

As explained above, the first ROM signal (ROM1) which is the output of the summing amplifier 59, the RAM signal (RAM) which is the output of the differential amplifier 60, the focusing error signal (FES) from the FES generation circuit 54, and the tracking error signal (TES) from the TES generation circuit 55, are input to the main controller 15.

Also, data for recording and readout data are exchanged between the main controller 15 and the data source 66 via the interface circuit 68.

The first ROM signal (ROM1=G+H), second ROM signal (ROM2=I), and RAM signal (RAM=G-H) input to the main controller 15 are each detected and used in certain modes, that is, during simultaneous ROM and RAM reproduction, and during ROM reproduction and simultaneous RAM recording (writing).

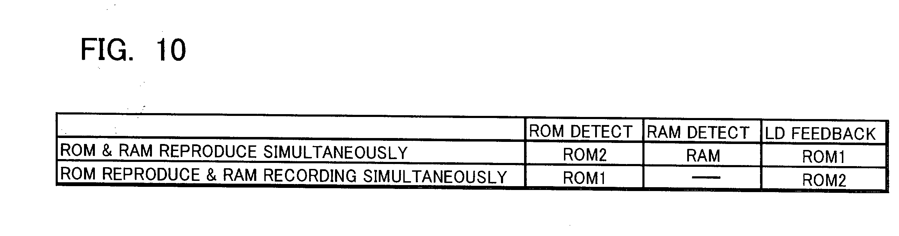

Fig. 10 shows the combinations of detection of the above ROM1 (=G+H), ROM2 (=I), and RAM (=G-H) signals in each preferred mode. The main controller 15 generates command signals for the LD driver 31 corresponding to each mode. In accordance with these command signals, the LD driver 31 performs negative-feedback control of emission power of the semiconductor laser diode LD according to the first ROM signal (ROM1=G+H) during ROM and RAM reproduction, and performs negative-feedback control of emission power of the semiconductor laser diode LD according to the second ROM signal (ROM2=I) during RAM recording.

During magnetooptical (RAM) recording, data from the data source 66 is input to the main controller 15 via an interface 68. When a magnetic field modulation recording method is used, the main controller supplies this input data to the magnetic head driver 34. The magnetic head driver 34 drives the magnetic head 35 to modulate the magnetic field according to the recording data. At this time in the main controller 15, a signal specifying recording is sent to the LD driver 31, and the LD driver 31 executes negative-feedback control of the emission of the semiconductor laser diode LD such that the laser power is optimal for recording, according to the second ROM signal (ROM2=I). When using an optical modulation recording method, the input data is sent to the LD driver 31, to perform optical modulation driving of the laser diode LD. At this time in the main controller 15, a signal specifying recording is sent to the LD driver 31, and the LD driver 31 executes negative-feedback control of the emission of the semiconductor laser diode LD such that the laser power is optimal for recording, according to the second ROM signal (ROM2=I).

The main controller 15 (in Fig. 8, the servo controller 15-2) drives a focusing actuator 19 to control a focusing spot of the light beam according to the detected focusing error signal FES. The main controller 15 (again, in Fig. 8, the servo controller 15-2) also drives a tracking actuator 6 to control seeking and tracking of the light beam according to the detected tracking error signal TES.

According to this embodiment of the present invention, the G+H (ROM1) signal of the detector 47, or the I (ROM2) signal of the detector 43, is used in laser power adjustment. As shown in Fig. 10, when simultaneously reproducing both the ROM signal and the RAM signal, the laser power is controlled such that the G+H signal is constant, so that the RAM readout signal (=G-H) is not affected by crosstalk from the phase pit modulation of the above optical information recording medium 3. ROM detection is preferably not performed during optical modulation recording.

As ROM-RAM disks, ROM and RAM disks may typically be laminated together, with information detected optically from the sides of the respective opposing faces; or, information may be detected from the same side, with the position in the depth direction changed; or, the ROM region and RAM region may be separated in two dimensions.

However, in the cases of each of these recording media, the ROM and RAM information cannot be read simultaneously using a single pickup device, nor can RAM information be written while reproducing ROM information. As recording media for use in the content delivery of this invention, when media are employed in which a recording film comprising a magnetooptical recording layer is formed on top of a protrusion/depression pit information layer which physically cannot be rewritten, as shown in Fig. 6, then the superposed recording of RAM signals above ROM signals is possible and, in addition, it is possible to exploit the fact that ROM and RAM signals can be simultaneously reproduced.

The recording and reproduction device 4 shown in Figs. 8 and 9 has a configuration preferably including an optical pickup which reads ROM and RAM information, and a magnetic head which records RAM information. According to this configuration, RAM signals can be detected while reproducing ROM signals.

Also, through negative-feedback of ROM1 signals to the laser driver, intensity modulation noise in RAM signals caused by the depressions and protrusions of the ROM portion of the recording medium can be reduced, so that accurate detection of RAM signals is possible. At this time, ROM signals can be detected from ROM2 signals. The optical pickup mechanism can access an arbitrary radial position of the recording medium by means of a seek mechanism using a ball-screw feed mechanism. Hence, random access of content recorded in the ROM portion, and of advertising information recorded in the RAM portion, is possible.

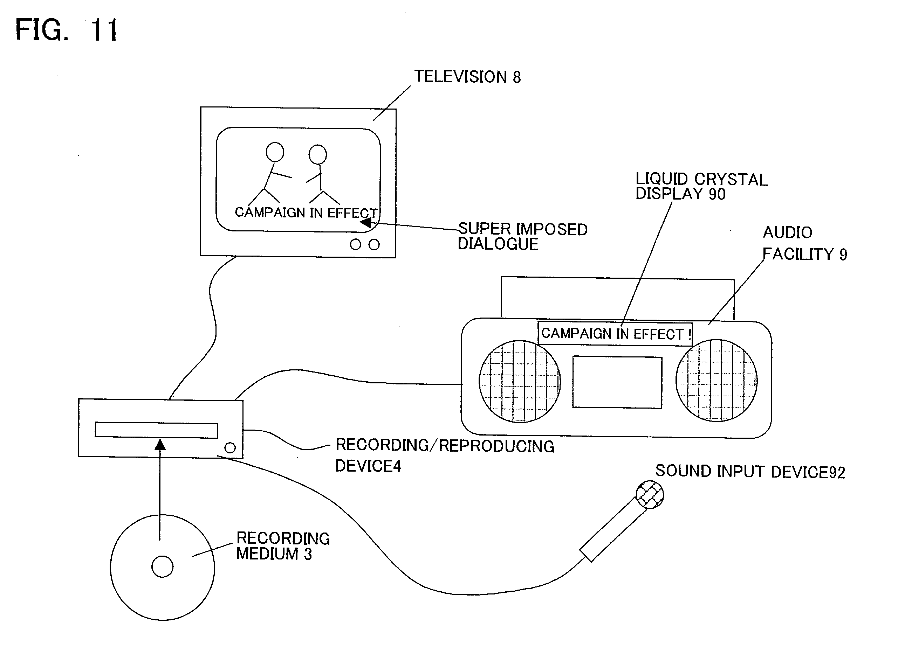

Using such a recording and reproduction device 4, the user can, while at home, listen to or dub the music content in the ROM portion of the content delivery media unit 3. Figs. 11 to 13 show examples of use of a content delivery media unit 3 by a user.

As shown in Fig. 11, the recording and reproduction device 4 can be connected to a television set 8 or audio equipment 9, and can reproduce video information and voice information. According to this embodiment of the present invention, ROM information and RAM information can be reproduced simultaneously, so that, for example, advertising information can be displayed as subtitles superimposed on video information from ROM. Also, questionnaire or other information from the user can be recorded in the RAM portion using a microphone, or other voice input equipment 92. Additionally, RAM information can be used to display advertising information as text, for example, on a liquid crystal display 90 used as a control panel, or similar, of the audio equipment 9.

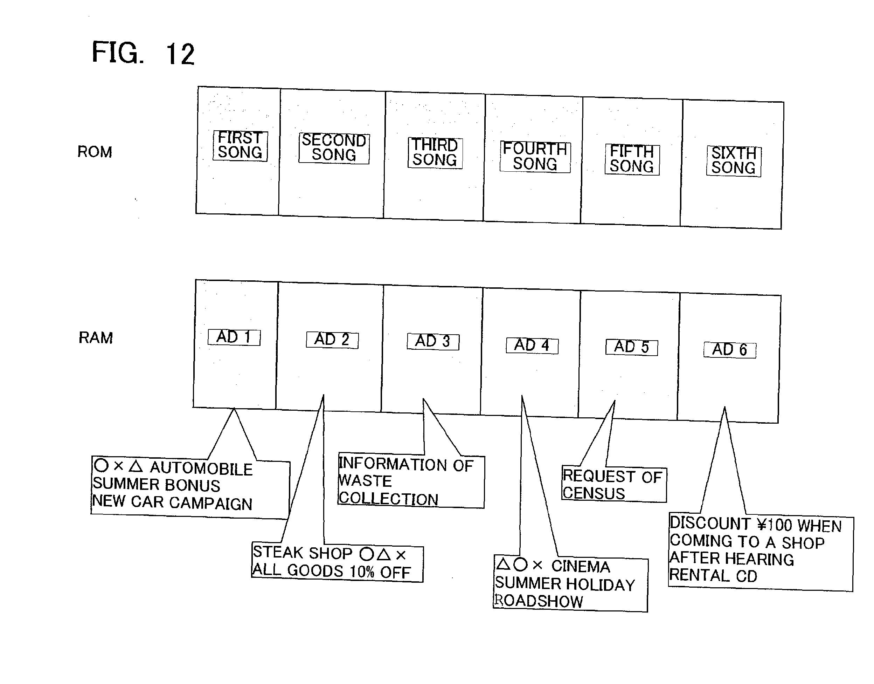

Fig. 12 shows a relation between music content of the ROM portion and RAM portion content. As indicated in Fig. 12, advertisements 1, 2, etc., are recorded in the RAM portion corresponding to each of the songs in the ROM section. According to this configuration, when the first song in the ROM portion is reproduced, the user also sees the advertisement 1 reproduced.

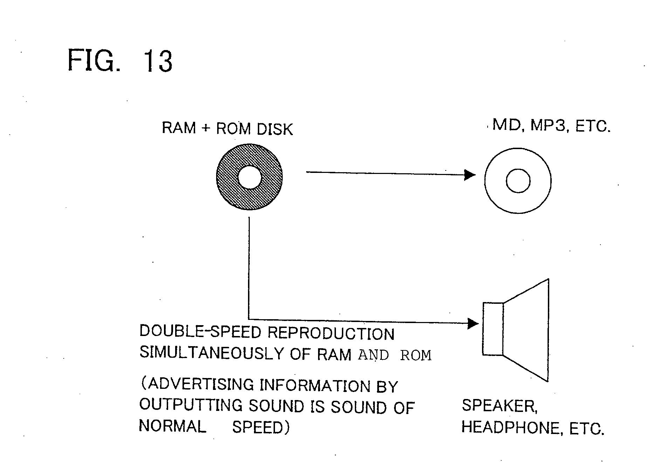

As shown in Fig. 13, by providing a mechanism to output advertising information at 1 times speed during n times speed output (where n is greater than 1), for the purpose of audio information replication or, in equipment with replication functions, during the n times speed reproduction of ROM and RAM signals (for example, during writing of advertising information, writing at n times speed), a user who is idle during normal replication can still view advertising information. Ordinarily, dubbing is performed using, for example, double-speed operation.

That is, when downloading advertising information to a downloading machine, by setting operation for double-speed mode or similar, ordinary-speed audio can be heard even during double-speed reproduction. As indicated in Fig. 13, during copying, the advertising information is reproduced and can be heard through speakers or similar while reproducing the music content in ROM. If advertising information is allocated to each song number, as shown in Fig. 12, the different advertisements can be heard during dubbing.

For a given configuration of the present invention, some cases may be anticipated in which the downloading machine is misused and a customer brings ROM-RAM media which have not been rented to the store and obtains a cash rebate from the downloading machine. However, more frequent downloading of advertising information is still desirable from the standpoint of the advertisement delivery system. Also, the rental store should not directly suffer harm from this scenario.

Thus, according to embodiments of the present invention, there are advantages that the music content portion is recorded in ROM, so that lending and returns are possible in exactly the same manner as for normal CD music media or the like, and that cash rebates can be offered through advertisements in the RAM portion. Furthermore, even if information in the RAM portion is erroneously erased, the music content in ROM can still be protected.

ROM and RAM signals are reproduced simultaneously, but an advertisement output time is provided in the ROM in advance, and during this time, advertisements recorded in RAM information can be output. For example, according to another embodiment of the present invention, prior to the beginning of content output, or after the beginning of output, advertisements can also be output. During content reproduction, advertisements can also be output. Regions not used for advertisements can also be used as regions to record disk management information or user questionnaire information.

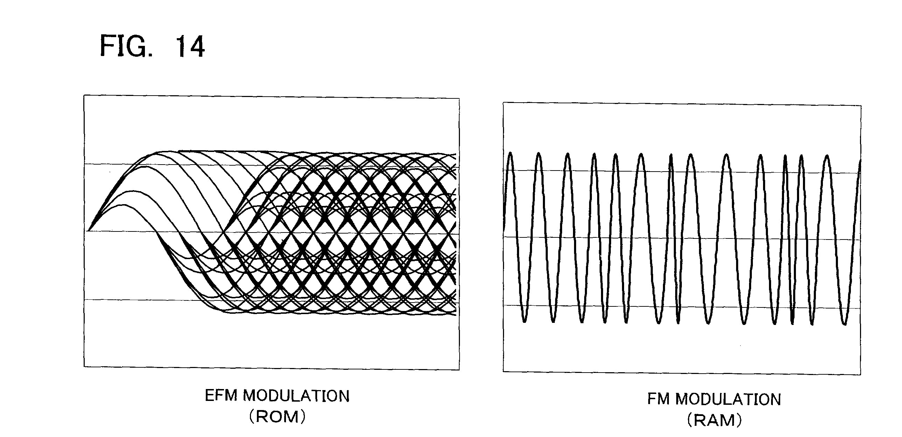

ROM information is generally recorded as EFM (eight-to-fourteen modulation) or other digital signals, as shown in Fig. 14. On the other hand, RAM information can be recorded as EFM signals, NRZI signals, or RLL 1-7 signals. However, in order to record simple audio information, recording using an FM (frequency modulation) method is effective.

Thus, in the present invention a content delivery method and system delivers media with content stored in ROM while the latest advertising information is added. Moreover, advertisements can be viewed or heard easily during reproduction. Recording media are used in which content information is in physically stable ROM, while advertising information is recorded in RAM, enabling the delivery of content with advertisements for which the advertisement period has not elapsed. In addition, by reproducing content using media enabling simultaneous ROM and RAM reproduction, as well as a drive for such media, advertisements can be automatically reproduced. Consequently, users can view or hear advertisements without being conscious of an effort to obtain the advertisements. In this way the advertisements stored on a medium can be changed each time a user hires the medium from a hire shop, for example. This prevents the advertisements from becoming outdated. Thus, the advertisements accompanying a DVD containing a film, for example, are not limited to those recorded at the time of release of the DVD.

Embodiments of this invention have been explained above, but one skilled in the art will be aware that various modifications are possible within the scope of this invention, and such modifications are not excluded from the technical scope of the invention.

Because recording media are employed in which content information is recorded in physical stable ROM and advertising information is recorded in RAM, it is possible to deliver content together with advertisements for which the advertisement period has not elapsed. And because media supporting simultaneous reproduction from ROM and RAM are used together with a drive for the media, advertisements can be reproduced together with content reproduction, so that the user can view or hear advertisements without being conscious of additional effort to obtain the advertisements. Consequently, advertising revenue can be included in delivery fees, and therefore the same content can be provided reliably and at a lower cost, yet without necessarily detracting from the revenue of the content rental business.

Furthermore, content may be recorded in physical pits by means of a stamping machine, so that advertising information can be rewritten with no effect on the content data.

Although the above embodiments have been explained with reference to advertising information, this is not the only kind of information capable of being associated with the content. For example, in the case of music content, the information stored in RAM may be news about the musical artist, tour dates or the like having a limited duration of interest. In the case of a software program for a computer, the ancillary information may include user instructions, patches or bug fixes. Thus, the media as a whole may be tailored to the user (e.g. in terms of language) without any need to vary the ROM content. Consequently, the invention provides a technique for delivery data to a user in which some of the data is recorded in a permanent form for user access at any future time, and other data is recorded in a rewritable form for temporary access and possible future replacement, deletion or updating.

## Claims

1. A content delivery method, comprising the steps of:

   writing information to a RAM portion of a recording medium (3) prior to or at the time of delivering said recording medium with content recorded in a ROM portion to a user; and
   simultaneously reproducing said content in said ROM portion and said information in said RAM portion by a reproduction device (4) that uses a single pickup mechanism to simultaneously reproduce said content and said information of said recording medium.

2. The content delivery method according to claim 1, wherein said recording medium (3) comprises said ROM portion having said content formed by physical changes of an optically transparent or reflective substrate, and said RAM portion comprises a rewritable recording layer formed on top of or below said ROM portion.

3. The content delivery method according to claim 1 or 2, wherein said RAM portion of said recording medium comprises a magneto-optical recording medium, and said reproduction device comprises a magneto-optical media drive which employs light for reproduction of data in said ROM portion and said RAM portion of said magneto-optical recording medium.

4. The content delivery method according to any of claims 1 to 3 wherein said step of writing information to said RAM portion includes writing advertising information, and further comprising a step of providing cash rebates to said user corresponding to writing of said advertising information by a writing device.

5. The content delivery method according to any of claims 1 to 4, wherein said writing step comprises a step of writing said information to said RAM portion such that said information is reproduced in synchronization with streaming data of said content of said ROM portion that is output according to a passage of time.

6. The content delivery method according to any of claims 1 to 5, wherein said ROM portion stores EFM-modulated content, and said information in said RAM portion is recorded using frequency modulation.

7. The content delivery method according to any of claims 1 to 6,
  wherein said writing step comprises a step of writing at least one audio advertisement or image advertisement as said RAM information of said recording medium, and recording said content including at least audio information or image information as said ROM information, and
  wherein said reproducing step comprises a step of simultaneously outputting said information of said ROM portion and of said RAM portion from said reproduction device to an audio or image output device connected to said reproduction device (4).

8. The content delivery method according to any of claims 1 to 7, wherein said reproduction step comprises a step of outputting said ROM information at n times (where n is greater than 1) an output speed of said RAM information.

9. The content delivery method according to any of claims 1 to 8, wherein said writing step comprises a step of updating said RAM information when said recording medium is rented to said user for a limited time period.

10. The content delivery method according to claim 9, further comprising a step of returning said recording medium to the deliverer after writing information of said user on said RAM portion of said recording medium.

11. A content delivery system, comprising:

  a writing device (14) for writing information to a RAM portion of a recording medium when delivering said recording medium with content recorded in a ROM portion to a user; and
  a reproduction device (4) having a single pickup mechanism for reproducing said content of said ROM portion and said information of said RAM portion of said recording medium (3),

  wherein said reproduction device simultaneously reproduces said content and said information of said recording medium by using said single pickup mechanism.

12. The content delivery system according to claim 11, wherein said recording medium (3) comprises a ROM portion having said content formed by physical changes to an optically transparent substrate, and a RAM portion having a rewritable recording layer formed on top of said ROM portion.

13. The content delivery system according to claim 11 or 12, wherein said RAM portion of said recording medium (3) comprises a magneto-optical recording medium, and said reproduction device (4) comprises a magneto-optical media drive which employs light for reproduction of data in said ROM portion and said RAM portion of said magneto-optical recording medium.

14. The content delivery system according to any of claims 11 to 13, wherein said information of said RAM portion is advertising information, and further comprising a mechanism for providing cash rebates to said user corresponding to said writing of said advertising information by said writing device.

15. The content delivery system according to any of claims 11 to 14, wherein said writing device (14) writes said information to said RAM portion such that said information is reproduced in synchronization with streaming data of said content of said ROM portion that is output according to a passage of time.

16. The content delivery system according to any of claims 11 to 15, wherein said ROM portion stores EFM-modulated content, and said information of said RAM portion is recorded using frequency modulation.

17. The content delivery system according to any of claims 11 to 16,
  further comprising an audio or image output device (9, 8) connected to said reproduction device (4) and for simultaneously outputting said information of said ROM portion and said RAM portion,
  wherein said content of said recording medium (3) includes at least audio information or image information as said ROM information and at least one of audio advertisements and image advertisements as said RAM information.

**18.** The content delivery system according to any of claims 11 to 17, wherein said reproduction device (4) outputs said ROM information at n times speed (where n is greater than 1) of an output speed of said RAM information.

**19.** The content delivery system according to any of claims 11 to 18, wherein, when said recording medium (3) is rented to said user for a limited time period, said writing device updates said RAM information.

**20.** The content delivery system according to claim 19, wherein said reproduction device (4) for said recording medium (3) has a function to record information to said RAM portion, and said recording medium recorded by said reproduction device is returned to a rental source.

**21.** A storage medium comprising: a substrate; a ROM portion for storing data formed by physical changes of an optically markable layer, and a RAM portion comprising a rewritable recording layer formed on the same side of the substrate as the optically markable layer.

# FIG. 1

CONTENT DISTRIBUTION SERVER

ADVERTISEMENT DOWN-LOAD MACHINE 14

EXIT    ENTRANCE

CONTENT DISPLAY SHELVES 10

CONTENT RENTAL COUNTER

EP 1 398 773 A2

EP 1 398 773 A2

# FIG. 2

S10 — SELECT CONTENT SOFTWARE    ◎ ROM CONTENT

S12 — DETERMINE RENTAL AND PAY RENTAL CHARGE

S14 — DOWN-LOAD ADVERTISEMENT INFORMATION TO RAM    ◉ ROM+RAM

CASH REBATE ACCORDING TO ADVERTISEMENT FARE

S16 — VIEW AND LISTEN TO CONTENT AND ADVERTISEMENT

S18 — RETURN CONTENT

13

# FIG. 3

# FIG. 4

# FIG. 5

MANAGE CONTENT DELIVERY FEE

·CONTENT USAGE FEE

·ADVERTISEMENT FEE·TOTAL

·RENTAL FEE TOTAL

·INCIDENTAL FEE

MANAGE ADVERTISING INFORMATION

·OBTAIN ADVERTISING INFORMATION

·CONFIRM ADVERTISING PERIOD

·CONFIRM ADVERTISING AREA

·CONFIRM CASH REBATE

·WRITE AND DELETE ADVERTISING INFORMATION

RENTAL PROCESS

·CONFIRM USER IDENTITY

·CONFIRM RENTAL PERIOD

·CHARGE RENTAL FEE

RETURN PROCESS

·CONFIRM USER IDENTITY

·CONFIRM QUESTIONAIRE   INFORMATION

·CONFIRM THE NUMBER OF ROM REPRODUCTIONS

· CONFIRM THE NUMBER OF RAM REPRODUCTIONS

·CASH REBATE

EP 1 398 773 A2

# FIG. 6

PROTECTIVE
COAT 4F

REFLECTIVE
LAYER 4E

DIELECTRIC
LAYER 4D

MAGNETO-OPTICAL
RECORDING
LAYER 4C

DIELECTRIC
LAYER 4B

TRANSPARENT SUBSTRATE 4A

EP 1 398 773 A2

FIG. 7

# FIG. 8

EP 1 398 773 A2

FIG. 9

EP 1 398 773 A2

# FIG. 10

| | ROM DETECT | RAM DETECT | LD FEEDBACK |
|---|---|---|---|
| ROM & RAM REPRODUCE SIMULTANEOUSLY | ROM2 | RAM | ROM1 |
| ROM REPRODUCE & RAM RECORDING SIMULTANEOUSLY | ROM1 | — | ROM2 |

EP 1 398 773 A2

# FIG. 11

TELEVISION 8

CAMPAIGN IN EFFECT

SUPER IMPOSED DIALOGUE

LIQUID CRYSTAL DISPLAY 90

AUDIO FACILITY 9

CAMPAIGN IN EFFECT !

RECORDING/REPRODUCING DEVICE4

SOUND INPUT DEVICE92

RECORDING MEDIUM 3

EP 1 398 773 A2

## FIG. 12

ROM

| FIRST SONG | SECOND SONG | THIRD SONG | FOURTH SONG | FIFTH SONG | SIXTH SONG |

RAM

| AD 1 | AD 2 | AD 3 | AD 4 | AD 5 | AD 6 |

○×△ AUTOMOBILE SUMMER BONUS NEW CAR CAMPAIGN

STEAK SHOP ○△× ALL GOODS 10% OFF

INFORMATION OF WASTE COLLECTION

△○× CINEMA SUMMER HOLIDAY ROADSHOW

REQUEST OF CENSUS

DISCOUNT ¥100 WHEN COMING TO A SHOP AFTER HEARING RENTAL CD

EP 1 398 773 A2

FIG. 13

RAM + ROM DISK

MD, MP3, ETC.

DOUBLE-SPEED REPRODUCTION
SIMULTANEOUSLY OF RAM AND ROM

(ADVERTISING INFORMATION BY
OUTPUTTING SOUND IS SOUND OF
NORMAL    SPEED)

SPEAKER,
HEADPHONE, ETC.

FIG. 14

EFM MODULATION
(ROM)

FM MODULATION
(RAM)